# EUROPEAN PATENT SPECIFICATION

(11) **EP 3 618 642 B1**
(45) Date of publication and mention of the grant of the patent: **11.09.2024**
(21) Application number: 18726008.8
(22) Date of filing: 02.05.2018
(51) Int. Cl.: A23K 20/147, A23K 20/28, A23K 10/20, A23K 10/22, A23K 10/26, A23K 10/30, A23K 20/163, A23K 50/40, A23K 20/20, A23K 50/48

(54) **PET FOOD AND METHOD OF FORMING THEREOF**
HAUSTIERFUTTER UND VERFAHREN ZUR FORMUNG DAVON
ALLIAGE DE TITANE-TANTALE ET SON PROCÉDÉ DE FORMATION

(30) Priority: 03.05.2017 DE 102017109409
(43) Date of publication of application: 11.03.2020
(73) Proprietor: Mars Incorporated, Mclean, VA 22101-3883 (US)
(72) Inventor: SCHLEBUSCH, Johannes, Paul, 27283 Verden (DE)
(74) Representative: Scholz, Volker
(86) International application number: PCT/US2018/030653
(87) International publication number: WO 2018/204497

(56) References cited:
- JP-A- 2010 246 468
- US-A1- 2011 034 411
- US-A1- 2013 287 930

## Description

### CROSS-REFERENCE TO RELATED APPLICATION

This application claims priority to German Application No. 102017109409.1, filed May 3, 2017.

The present invention relates to a pet food and its method of making.

The making of pet food is generally known within the pet food industry. Typically, the pet food is prepared by mixing, chopping and emulsifying a mixture of raw meat ingredients such as beef, pork, lamb and chicken obtained from the muscle tissue and meat by-products. These raw meat ingredients are then mixed with various dry ingredients, for example vegetable by-products, starches, vitamins, minerals, gums and glutens, to make a meat emulsion. The resulting meat emulsion is then extruded via a nozzle into a continuous slab or sheet that is further transferred into a steam tunnel where the slab/sheet is cooked by exposing it to heat. The cooked slab/sheet is then chopped into pieces, optionally a sauce preparation or the like may be added, and the pet food is then packed and processed for sterilization.

Today's diets for pets, such as cats or dogs, are highly digestible diets. Therefore, the stool volume is regularly low. This means that also the number of defecations is low. Thus, in case of obstipation or metabolic disorder, these highly digestible diets may have the disadvantage of not producing sufficient stool volume in order to ease a fast exchange of the intestines of a pet. However, a sufficient stool volume effecting a subsequent defecation is required, for example, after a successful antibiotic treatment, since residual antibiotics in the intestine, the changed microbiome and high toxin containing feces should be removed fast in order to enable a healthy microbiome and a faster convalescence phase of the pet.

WO 2017/081214 A1 discloses a solid pet food component which comprises a mixture of curdlan and a protein and which has a moisture content of at least 40%. The solid pet food component may comprise a hydrocolloid, e.g. pectin.

US 8,691,792 B2 discloses a method for maintaining or improving the gastrointestinal health of a feline susceptible to or suffering from poor gastrointestinal health comprising administering to the animal a gastrointestinal health maintaining or improving amount of a composition comprising from 1 to 20% carbohydrate; from 3 to 10% total dietary fiber, wherein the total dietary fiber contains from 10 to 40% soluble fiber comprising at least one of psyllium or oat bran and from 90 to 60% insoluble fiber comprising a compound selected from the group consisting of pea fibers, oat fibers, bean hulls, and combinations thereof, the carbohydrates comprising the soluble fiber and the insoluble fiber; and from 0.1 to 10% omega-3 fatty acids; wherein the composition has a digestibility coefficient of at least 80.

US2013287930 discloses a method for producing palatable dry cat food comprises producing dry cat food preparation comprising e.g. phyllosilicates and/or glucomannans, adding palatability enhancer to the dry cat food preparation, and obtaining palatable dry cat food.

JP 2010 246468 A relates to

Jerky snacks for dogs, prepared by mixing dietary fiber, grain flour and/ or starch, curdlans, psyllium seed gum and guar gum, heating to obtain a dry product.

It is therefore an object of the present invention to provide a pet food providing a higher stool volume in order to ease an exchange within the intestines of a pet. It is a further object to provide a method of forming such a pet food.

Such a food is provided, and comprises protein, curdlan and an adsorptive agent, wherein the adsorptive agent is selected from the group consisting of activated charcoal; a silicate; a native or modified cellulose; and resistant starch.

In one embodiment, the silicate is bentonite.

In another embodiment, the native or modified cellulose is micro-crystalline cellulose.

A method of preparing a pet food is also provided, and comprises mixing protein, curdlan and an adsorptive agent, heating the mixture to at least 80°C, allowing the heated mixture to cool and optionally shaping and cutting the resultant material and optionally adding jelly, gravy and/or any other edible background matrix. Optionally, the thus obtained pet food may be further processed by packaging and sterilization.

In one embodiment the adsorptive agent is selected from the group consisting of activated charcoal; silicates, especially bentonite; native or modified cellulose, preferably micro-crystalline cellulose; and resistant starch. The term "resistant starch" as used throughout the application is to be understood to mean resistant starch and fibers, including degradation products thereof, that escape from digestion in the small intestine of healthy pets. Resistant starch occurs naturally in pet foods but is also added to pet foods by the addition of isolated or manufactured types of resistant starch.

In one embodiment, the adsorptive agent is present in the pet food in an amount of 0.05 to 5.0 wt%, preferably 0.1 to 4.0 wt%, more preferably 1.5 to 3.0 wt%, based on the total weight of the pet food.

In another embodiment, the pet food additionally comprises prebiotics and/or probiotics, preferably in a total amount of 0.05 to 3.0 wt%, based on the total weight of the pet food, preferably 0.01 to 2.0 wt%, more preferably 0.5-1.5 wt%.

According to the present invention, prebiotics shall be understood as substances that induce the growth or activity of microorganisms, for example bacteria and fungi, that contribute to the well-being of their host In the gastrointestinal tract, prebiotics can alter the composition of organisms in the gut microbiome. Probiotics are understood, according to the present invention, as microorganisms that provide health benefits when consumed. The term probiotics is used to name ingested microorganisms associated with benefits for humans and animals. One example of a suitable prebiotic is inulin.

In one embodiment, curdlan is present in an amount of 1 wt% to 10 wt%, preferably 2 wt% to 7 wt%, more preferably 2 to 5 wt%, based on the total weight of the pet food.

The pet food is a wet pet food with a moisture content of at least 40 wt%, based on the total weight of the pet food. In one embodiment the pet food has a moisture content of at least 45 wt.-%, 50 wt.-%, 55 wt.-%, 60 wt-%, 65 wt.-%, 70 wt-%, 75 wt-%, 80 wt.-%, 85 wt-%, 90 wt-% or 95 wt.-%.

In one embodiment, the protein content is from 5 wt% to 30 wt%, preferably 10-25 wt%, more preferably 15-20 wt%, based on the total weight of the pet food, and wherein the protein is preferably derived from one or more of poultry, pork, beef, lamp, fowl, game, fish, crustaceans, shellfish, larvae, worm, insects, yeast, plant, algae, microalgae, seaweed, fungi, microorganisms or maize gluten powder, each in the form of meal, powder, slurry and/or the whole native material including chopped up or sliced meats, offal or viscera. In one preferred embodiment, the protein content is from 6 to 20 wt.-%, based on the total weight of the pet food.

In another embodiment, the pet food is for use as a diet that induces or promotes exchange within the intestine of a pet. Preferably, the diet "washes-out" or "cleans" the intestine of the pet, so that a fast exchange of the contents of the pets' intestines due to the provision of a higher stool volume can be achieved.

In one embodiment the pet food comprises a meat analogue.

In another embodiment the pet food is for dogs or cats.

It was surprisingly found that a pet food with the features of the present application leads to a fast exchange and cleaning of the intestine of a pet due to the provision of a higher stool volume and enables a quick build-up of a healthy microbiome. Thus, the inventive pet food functions as a diet for pets, for example following a successful antibiotic treatment. Very surprisingly, the use of the inventive pet food provides a higher stool volume compared to standard pet foods of the art.

As used herein, the term "adsorptive agent" is to be understood as an adsorbent upon the surface thereof a film of the adsorbate (atoms, ions or molecules from a gas, liquid or dissolved solids) is created. For the pet food of the present invention, the adsorptive agent functions to adhere water and preferably other compounds like residual antibiotics, mycotoxins, or other (negatively) physiologically active agents such like unwanted microbes and/or their metabolites on its surface.

Additional features and advantages of the present invention will become apparent from the following detailed description and non-limiting examples.

Curdlan is a hydrocolloid and sets up an irreversible solid form only upon heating (> 80°C) which is a unique property compared to other hydrocolloids which set up a reversible (temperature-dependent) structure or need ion addition to create a solid aggregate. Due to this property, a standard process for producing a pet food can be used.

Curdlan also provides a structure that does not change upon further heating and/or retorting. Surprisingly, together with the other ingredients, it retains palatability.

Curdlan is not soluble in water at physiological pH levels (pH5.5 to 8.5) and needs to be dispersed in water to create a suitable texture. Dispersion of powdered curdlan has previously been achieved by the use of an alkaline solution (curdlan becomes soluble at pH >11) and/or the use of a thickener. Surprisingly, no such alkaline solution is required to produce the inventive pet food. In fact, the pet food preferably has pH of <11, preferably <8.

Curdlan is a high molecular weight polymer of glucose, beta(1-3)-glucan. It is a nonionic polysaccharide and is considered as an insoluble dietary fiber. In a solid state form, it exists as a triple helix granule and is usually purchased in the form of a powder. Curdlan can be produced in high yield by fermentation culture of strains of *Alcaligenes faecalis* var. myxogenes, or *Agrobacterium radiobacter* NCIM 2443. Its production is well documented in the art. An important advantage of the invention is that curdlan is produced in high quantities, at high purity by a laboratory process, which enables sufficient quantities to be produced without relying on natural sources of hydrocolloids.

For the pet food of the present invention, the curdlan is in a heat-treated form, i.e. has obtained an irreversible solid form upon heating above 80°C.

The precise amount of curdlan to be used may be determined in combination with the amount of moisture or type and amount of protein being used. The skilled person can easily determine the amount of each component needed by tests.

As already mentioned above, the pet food may comprise at least one type of meat analogue. In one embodiment, the meat analogue is in the form of a solid. In one embodiment, the meat analogue is in the form of pieces. In a further embodiment, the meat analogue is in the form of solid pieces.

When used herein, the term "meat analogue" refers to a meat substitute suitable for use in pet or animal food as a meat replacement which may suitably be a "chunk". The meat analogue may have sensory attributes similar to cooked meat. Analogues may be incorporated into pet or human food products. They are particularly suitable for inclusion in wet pet food products of all types, e.g. they can be incorporated into pates, loafs and chunk in sauce formats. They are particularly suitable for inclusion in "chunk in sauce" products, e.g. "chunk and gravy", "chunk and jelly" or "chunk and mousse" products.

The pieces of meat analogue can be also considered as chunks. As used herein, the term "chunk" alone includes a unitary piece, preferably consisting of at least one protein source optionally mixed with binder ingredient.

In another embodiment, the protein is animal protein, non-animal protein or a mixture thereof. In one embodiment, the protein includes animal protein from a meat source, an animal protein from a non-meat source, protein from a vegetable source or mixtures thereof.

In a further embodiment, the protein is derived from one or more of poultry, pork, beef, lamb, fowl, game, fish, crustaceans, shellfish, larvae, worm, insects, yeast, plant, algae, microalgae, seaweed, fungi, microorganisms or maize gluten powder, each in the form of meal, powder, slurry and/or the whole native material.

The pet food may comprise only the protein, curdlan, adsorptive agent and water or it may comprise additionally other ingredients, such as additional protein, other hydrocolloids, flavors, colorants, vitamins, minerals, carbohydrate and/or fat.

Flavor may be added to give a particular taste or smell and may be derived from natural ingredients or artificially created. Flavors may suitably include one or more products of the Maillard reaction.

The pet food may be a wet pet food product. Typically, wet pet food products are formed as (and are known as) chunks in gravy and/or chunks in jelly products or formed as a meat loaf product. The pet food may be also incorporated into other pet food products.

The pet food may be incorporated into any product which an animal, such as a dog or cat, may consume in its diet. The term animal in this text includes any animal that could benefit from or enjoy the consumption of the food compositions disclosed, including canine and/or feline animals. Most preferably, the animal is a pet dog or pet cat.

A method of making the pet food may suitably comprise mixing curdlan, protein, adsorptive agent and optionally other ingredients to provide a mixture of, preferably, at least 40% water, heating to at least 80°C, optionally for at least 60 seconds, and allowing the pet food to cool, with optional shaping and cutting.

The forming of the pet food is carried out according to processes known in the art. These include processes to form the pet food by extrusion through nozzles and heating. The ingredients to make the pet food are mixed and heated/extruded sufficiently (optionally with pressure) to solidify the mixture. Heating temperatures from 90-150°C, preferably 100-120°C, for 1 to 10 minutes, preferably about 1 minute may be applied. The cooled product is then cut into portions/chunks as desired. Methods used to form a pet food are described in WO 00/69276 and US 4,247,562.

Jelly, gravy or any other matter can then be added. The pet food may then be packed and sterilized.

### Example 1 - Pet food for a dog

A commercially available pet food containing between 20-30 wt% protein, but not containing curdlan and adsorptive agent, was tested in a test group of adult dogs for one week, and the wet feces output was checked. It was found that, on average, 185 grams wet feces output per 1000 kcal energy uptake eaten was observed.

Based on this pet food, 4.79 wt% curdlan (supplied by Anbar) and 0.5 wt% of activated charcoal as absorptive agent were added, and the thus produced pet food was tested as described above.

It was found that a stool volume of 280 grams wet feces per 1000 kcal eaten was achieved.

### Example 2 - Pet food for a cat

A commercially available pet food for cats, containing about 20-30 wt% of protein, but not containing curdlan and adsorptive agent, was prepared and tested in a test group of adult cats for one week. A wet feces output, on average, of about 145 grams per 1000 kcal energy eaten was achieved.

A pet food for cats according to the present invention was prepared by adding 3.5 wt% curdlan and 0.5 wt% of activated charcoal as adsorptive agent to the same commercially available cat food. The test was carried out as above, and it was found that a stool volume of about 164 grams wet feces output per 1000 kcal energy eaten was achieved.

The features disclosed in the foregoing description and in the claims may, both separate or in any combination be material to realize the invention in diverse forms thereof.

## Claims

1. A pet food comprising protein, curdlan and an adsorptive agent, wherein the adsorptive agent is selected from the group consisting of activated charcoal and a silicate or a combination of these,
wherein the pet food is a wet pet food with a moisture content of at least 40 wt%, based on the total weight of the pet food.

2. The pet food according to claim 1, wherein the silicate is bentonite.

3. The pet food according to any of claims 1 to 2, wherein the adsorptive agent is present in the pet food in an amount of 0.05 to 5.0 wt.%, preferably 0.1 wt% to 4.0 wt%, more preferably 1.5 wt% to 3.0 wt.%, based on the total weight of the pet food

4. The pet food according to any of the preceding claims, additionally comprising prebiotics and/or probiotics, preferably in a total amount of 0.05 to 3.0 wt%, based on the total weight of the pet food, preferably 0.01 to 2.0 wt%, more preferably 0.5 to 1.5 wt%.

5. The pet food according to any of the preceding claims, wherein curdlan is present in an amount of 1 wt% to 10 wt%, preferably 2 wt% to 7 wt%, more preferably 2 wt% to 5 wt%, based on the total weight of the pet food.

6. The pet food according to any of the preceding claims, wherein the protein content is from 5 wt% to 30 wt%, based on the total weight of the pet food, and wherein the protein is preferably derived from one or more of poultry, pork, beef, lamp, fowl, game, fish, crustaceans, shellfish, larvae, worm, insects, yeast, plant, algae, microalgae, seaweed, fungi, microorganisms or maize gluten powder, each in the form of meal, powder, slurry and/or the whole native material including chopped up or sliced meats, offal or viscera.

7. The pet food according to any of the preceding claims, which is a pet food for dogs or cats.

8. A method of preparing a pet food as claimed in any of the claims 1 to 7, comprising mixing protein, curdlan and an adsorptive agent, heating the mixture to at least 80°C, allowing the heated mixture to cool and optionally shaping and cutting the resultant material and optionally adding jelly and/or gravy.

## Patentansprüche

1. Haustierfutter, umfassend Protein, Curdlan und ein Adsorptionsmittel, wobei das Adsorptionsmittel ausgewählt ist aus der Gruppe bestehend aus Aktivkohle und einem Silikat oder einer Kombination davon,
wobei das Haustierfutter ein feuchtes Haustierfutter mit einem Feuchtigkeitsgehalt von mindestens 40 Gew.-%, bezogen auf das Gesamtgewicht des Haustierfutters, ist.

2. Haustierfutter nach Anspruch 1, wobei das Silikat Bentonit ist.

3. Haustierfutter nach einem der Ansprüche 1 bis 2, wobei das Adsorptionsmittel in dem Haustierfutter in einer Menge von 0,05 bis 5,0 Gew.-%, vorzugsweise 0,1 Gew.-% bis 4,0 Gew.-%, mehr bevorzugt 1,5 Gew.-% bis 3,0 Gew.-%, bezogen auf das Gesamtgewicht des Haustierfutters, vorliegt.

4. Haustierfutter nach einem der vorhergehenden Ansprüche, zusätzlich umfassend Präbiotika und/oder Probiotika, vorzugsweise in einer Gesamtmenge von 0,05 bis 3,0 Gew.-%, bezogen auf das Gesamtgewicht des Haustierfutters, vorzugsweise 0,01 bis 2,0 Gew.-%, mehr bevorzugt 0,5 bis 1,5 Gew.-%.

5. Haustierfutter nach einem der vorhergehenden Ansprüche, wobei Curdlan in einer Menge von 1 Gew.-% bis 10 Gew.-%, vorzugsweise 2 Gew.-% bis 7 Gew.-%, mehr bevorzugt 2 Gew.-% bis 5 Gew.-%, bezogen auf das Gesamtgewicht des Haustierfutters, vorliegt.

6. Haustierfutter nach einem der vorhergehenden Ansprüche, wobei der Proteingehalt von 5 Gew.-% bis 30 Gew.-%, bezogen auf das Gesamtgewicht des Haustierfutters, beträgt und wobei das Protein vorzugsweise abgeleitet ist von einem oder mehreren von Geflügel, Schwein, Rindfleisch, Lamm, Geflügel, Wildschwein, Fisch, Krebstieren, Schalentieren, Larven, Wurm, Insekten, Hefe, Pflanze, Algen, Mikroalgen, Seetang, Pilzen, Mikroorganismen oder Maisglutenpulver, jeweils in Form von Mehl, Pulver, Aufschlämmung und/oder dem gesamten nativen Material, einschließlich zerkleinertem oder aufgeschnittenem Fleisch, Abfall oder Eingeweide.

7. Haustierfutter nach einem der vorhergehenden Ansprüche, das ein Haustierfutter für Hunde oder Katzen ist.

8. Verfahren zur Herstellung eines Haustierfutters nach einem der Ansprüche 1 bis 7, umfassend das Mischen von Protein, Curdlan und einem Adsorptionsmittel, das Erhitzen der Mischung auf mindestens 80 °C, das Abkühlenlassen der erhitzten Mischung und gegebenenfalls das Formen und Schneiden des resultierenden Materials und gegebenenfalls das Hinzufügen von Gelee und/oder Bratensaft.

## Revendications

1. Aliment pour animaux de compagnie comprenant des protéines, du curdlane et un agent adsorbant, où l'agent adsorbant est sélectionné dans le groupe consistant en le charbon activé ou un silicate ou une combinaison de ceux-ci,
où l'aliment pour animaux de compagnie est un aliment pour animaux de compagnie sec ayant une teneur en eau, rapportée au poids total de l'aliment pour animaux de compagnie, d'au moins 40 % en poids.

2. Aliment pour animaux de compagnie selon la revendication 1, où le silicate est la bentonite.

3. Aliment pour animaux de compagnie selon l'une quelconque des revendications 1 à 2, où l'agent adsorbant est présent dans l'aliment pour animaux de compagnie à une quantité, rapportée au poids total de l'aliment pour animaux de compagnie, qui va de 0,05 à 5,0 % en poids, préférablement de 0,1 % en poids à 4,0 % en poids, plus préférablement de 1,5 % en poids à 3,0 % en poids.

4. Aliment pour animaux de compagnie selon l'une quelconque des revendications précédentes comprenant en outre des prébiotiques et/ou des probiotiques, préférablement à une quantité totale, rapportée au poids total de l'aliment pour animaux de compagnie, qui va de 0,05 à 3,0 % en poids, préférablement de 0,01 à 2,0 % en poids, plus préférablement de 0,5 à 1,5 % en poids.

5. Aliment pour animaux de compagnie selon l'une quelconque des revendications précédentes, où le curdlane est présent à une quantité, rapportée au poids total de l'aliment pour animaux de compagnie, qui va de 1 % en poids à 10 % en poids, préférablement de 2 % en poids à 7 % en poids, plus préférablement de 2 % en poids à 5 % en poids.

6. Aliment pour animaux de compagnie selon l'une quelconque des revendications précédentes, où la teneur en protéines, rapportée au poids total de l'aliment pour animaux de compagnie, va de 5 % en poids à 30 % en poids, et où les protéines sont préférablement dérivées de une ou plusieurs des sources suivantes : volaille, porc, boeuf, agneau, gibier à plumes, gibier, poisson, crustacés, fruits de mer, larves, vers, insectes, levures, végétaux, algues, microalgues, varech, champignons, microorganismes ou gluten de maïs hydrolysé, chacun sous la forme d'un repas, d'une poudre, d'une suspension épaisse et/ou du matériau de départ entier, y compris des viandes, abats ou organes hachés ou coupés en tranches.

7. Aliment pour animaux de compagnie selon l'une quelconque des revendications précédentes, qui est un aliment pour chiens ou chats.

8. Méthode de préparation d'un aliment pour animaux de compagnie tel que revendiqué à l'une quelconque des revendications 1 à 7, comprenant le mélange de protéines, de curdlane et d'un agent adsorbant, le chauffage du mélange à au moins 80 °C avant de laisser le mélange chauffé refroidir, et éventuellement une mise en forme et une découpe du matériau obtenu ainsi éventuellement que l'addition de gelée et/ou de jus de viande.
